# EUROPÄISCHE PATENTSCHRIFT

(11) **EP 2 646 301 B1**
(45) Veröffentlichungstag und Bekanntmachung des Hinweises auf die Patenterteilung: **07.01.2015**
(21) Anmeldenummer: 11738212.7
(22) Anmeldetag: 27.07.2011
(51) Int. Cl.: B60T 13/52, B60Q 1/44, B60T 17/22

(54) **VORRICHTUNG ZUR ÜBERWACHUNG VON POSITION UND BEWEGUNG EINES BREMSPEDALS**
DEVICE FOR MONITORING THE POSITION AND MOVEMENT OF A BRAKE PEDAL
DISPOSITIF DE SURVEILLANCE DE LA POSITION ET DU DÉPLACEMENT D'UNE PÉDALE DE FREIN

(30) Priorität: 30.11.2010 DE 102010062163
(43) Veröffentlichungstag der Anmeldung: 09.10.2013
(73) Patentinhaber: Continental Teves AG & Co. oHG, 60488 Frankfurt (DE)
(72) Erfinder: KÖNIG, Harald, 61239 Ober-Mörlen (DE); RÜFFER, Manfred, 65843 Sulzbach (DE)
(86) Internationale Anmeldenummer: PCT/EP2011/062899
(87) Internationale Veröffentlichungsnummer: WO 2012/072281

(56) Entgegenhaltungen:
- DE-A1- 10 323 655
- US-A1- 2004 155 647

## Beschreibung

Vorrichtungen zur Überwachung von Positionen und Bewegungen eines Bremspedals sind grundsätzlich bekannt.

Aus der DE 10 2008 020 A1 ist beispielsweise eine Hauptzylinderanordnung mit einem Kolben bekannt, bei welcher der Kolben zur gemeinsamen Bewegung mit einem Positionserfassungsstab dauerhaft gekoppelt ist. Der Stab ist in einem zu einer ersten Zylinderbohrung parallelen Führungsschacht im Zylindergehäuse verlagerbar geführt und weist ein Positionserfassungsorgan zur Erfassung von dessen Position mittels eines Positionserfassungssensors auf.

Ferner ist aus der DE 103 23 655 A1 ein Bremskraftverstärker mit einem Zuganger sowie mit einer darin integrierten Vorrichtung zum Schalten eines Bremslichts bekannt, welche einen relativ zum Bremskraftverstärker fixierten Sensor oder Schalter aufweist, der in Abhängigkeit von einer Verschiebung des Membrantellers relativ zu dem Zuganker ein Schaltsignal abgeleitet. Eine weitere Ausführungsform der DE 103 23 655 A1 beschreibt einen in einer Aufnahme abgedichtet fixierten Sensor, wobei die Aufnahme ein Elektronikmodul und ein Mechanikmodul aufweist. Das Mechanikmodul nimmt einem teleskopierbaren Fühler für den Membranteller auf.
Die bekannten Vorrichtungen werden als nachteilig in Hinblick auf Montage und Bauteilanzahl angesehen.

Daher ist es Aufgabe der Erfindung, eine andere Vorrichtung zur Überwachung von Positionen und Bewegungen eines Bremspedals bereitzustellen, welche eine einfache Montage und eine reduzierte Bauteilanzahl aufweist.

Diese Aufgabe wird erfindungsgemäß gelöst durch eine Vorrichtung zur Überwachung von Position und Bewegung eines Bremspedals zur Verwendung innerhalb eines geregelten Bremssystems für Kraftfahrzeuge, umfassend eine Bremsbetätigungseinheit mit einem Bremskraftverstärker mit einem Verstärkergehäuse, welches durch mindestens eine, mit einem pneumatischen Differenzdruck beaufschlagbare axial bewegliche Wand in mindestens eine Unterdruckkammer und mindestens eine Arbeitskammer unterteilt ist, wobei die bewegliche Wand durch einen an einem Steuergehäuse sich abstützenden Membranteller und eine daran anliegende Membran gebildet ist, und mit einem an den Bremskraftverstärker befestigten Hauptzylinder mit einem Gehäuse sowie mit mindestens einem darin linear verschiebbaren Kolben, und einen Stellungsgeber zur Überwachung der Lage des Bremspedals, welcher Signale in Richtung eines Sensorelementes aussendet, das mit einer elektronischen Steuereinheit verbindbar ist, wobei der Stellungsgeber auf einem an die Bewegung des Steuergehäuses oder der von dem Steuergehäuse getragenen beweglichen Wand gekoppelten Träger vorgesehen ist, welcher in einem Gehäuse des Sensorelementes geführt ist, und wobei das Gehäuse des Sensorelementes das Verstärkergehäuse und das Gehäuse des Hauptzylinders mit einem ersten Gehäuseabschnitt vakuumdicht durchragt. Hieraus ergibt sich der Vorteil, dass das Gehäuse des Sensorelementes sowie der Stellungsgeber im Servicefall ohne großen Aufwand austauschbar sind.

Die Austauschbarkeit kann gemäß einer vorteilhaften Weiterbildung der Erfindung in einfacher Weise dadurch realisiert werden, indem das Gehäuse des Sensorelementes mittels eines Befestigungsmittels demontierbar an dem Gehäuse des Hauptzylinders befestigt vorgesehen ist.

Als Befestigungsmittel kann gemäß einer vorteilhaften Ausführungsform ein Haltestift vorgesehen ist.
Vorzugsweise ist zur Abdichtung ein das Gehäuse des Sensorelementes umgebender Dichtring zwischen dem Gehäuse des Hauptzylinders und dem Verstärkergehäuse vorgesehen.

Gemäß einer vorteilhaften Ausführungsform der Erfindung ragt das Gehäuse des Sensorelementes mit einem zweiten Gehäuseabschnitt aus der Bremsbetätigungseinheit heraus, wobei das Sensorelement in dem zweiten Gehäuseabschnitt angeordnet ist, an welchem ein Steckerelement zur Verbindung mit der elektronischen Steuereinheit angeformt ist. Das Sensorelement kann so in einfacher Weise mit der elektronischen Steuereinheit verbunden werden. Ferner erweist sich die Anordnung des Gehäuses des Sensorelementes als packagingoptimal.

Vorzugsweise sind als Sensorelement ein Hall-Sensor und als Stellungsgeber ein Magnet vorgesehen. Es ist aber auch möglich, die Positionserfassung andersartig, beispielsweise optisch oder induktiv, durchzuführen.

Um die Toleranzen der Bauteile einfach ausgleichen zu können, sieht eine vorteilhafte Weiterbildung der Erfindung vor, dass der Magnet an einem ersten Ende des Trägers angeordnet und mit dem Träger mittels einer Pressverbindung verbunden ist.

Gemäß einer vorteilhaften Ausführungsform der Erfindung ist die Bewegung des Stellungsgebers an die Bewegung des Membrantellers der beweglichen Wand gekoppelt.

Eine alternative vorteilhafte Ausführungsform der Erfindung sieht vor, dass die Bewegung des Stellungsgebers an die Bewegung des Steuergehäuses gekoppelt ist.

Dabei kann vorzugsweise zur Kopplung der Bewegung des Stellungsgebers ein weiterer Magnet vorgesehen sein, welcher an einem zweiten Ende des Trägers angeordnet und mit dem Träger mittels einer Pressverbindung verbunden ist. Diese Anordnung des weiteren Magneten verbessert zusätzlich den Ausgleich der Bauteiltoleranzen.
Um die Kopplung am Steuergehäuse durchzuführen, ist gemäß einer vorteilhaften Ausführungsform der Erfindung am Steuergehäuse zur Kopplung mit dem weiteren Magnet ein Metallelement vorgesehen.

Eine alternative Ausführungsform der Erfindung sieht vor, dass zur Kopplung der Bewegung des Stellungsgebers eine Rückstellfeder vorgesehen ist, welche den Träger gegen das Steuergehäuse oder die von dem Steuergehäuse getragene beweglichen Wand vorspannt.

Vorzugsweise stützt sich die Rückstellfeder einenends an einem Boden eines Führungsschachtes des Gehäuses des Sensorelementes und anderenends an dem Träger ab.

Weitere Merkmale, Vorteile und Anwendungsmöglichkeiten der Erfindung gehen aus den Unteransprüchen und der nachfolgenden Beschreibung zweier Ausführungsbeispiele anhand der Zeichnung hervor. Es zeigt jeweils stark schematisiert sowie im Schnitt:
- Figur 1: eine bekannte Bremsbetätigungseinheit im Längsschnitt;
- Figur 2: einen Ausschnitt eines ersten Ausführungsbeispiels einer erfindungsgemäßen Vorrichtung;
- Figur 3: einen Ausschnitt eines zweiten Ausführungsbeispiels einer erfindungsgemäßen Vorrichtung und
- Figur 4: den Ausschnitt des ersten Ausführungsbeispiels gemäß Fig. 2 bei der Einstellung der Magnetpositionen auf dem Träger.

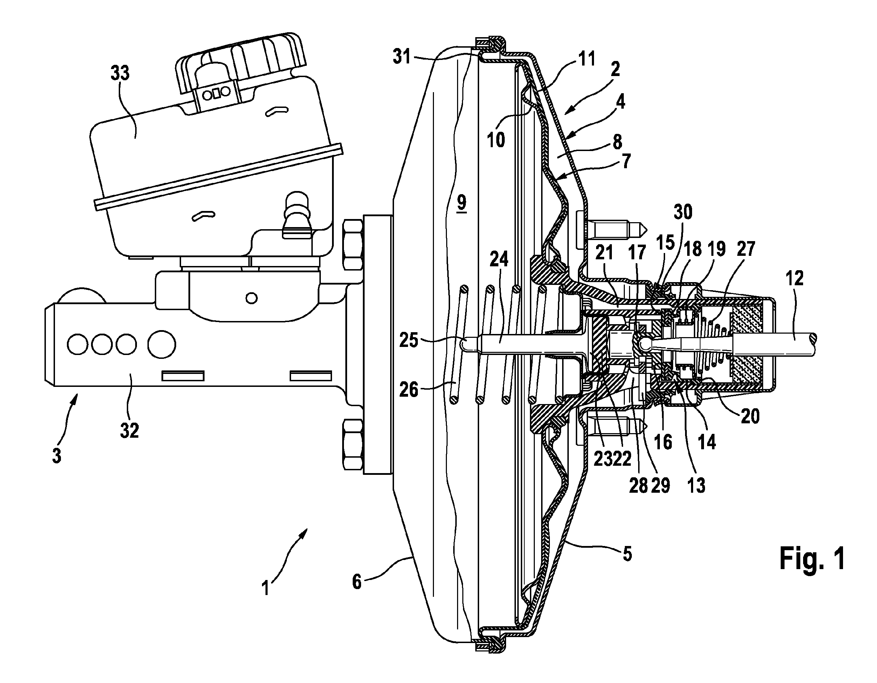

Fig. 1 zeigt eine bekannte Bremsbetätigungseinheit 1 mit einem Bremskraftverstärker 2 und einem daran befestigten Hauptzylinder 3 einer Kraftfahrzeugbremsanlage im Längsschnitt, welche in einer erfindungsgemäßen zur Überwachung von Positionen und Bewegungen eines Bremspedals Anwendung finden kann.

Ein lediglich schematisch angedeutetes Verstärkergehäuse 4 des Bremskraftverstärkers 2 umfasst eine erste Gehäusehalbschale 5 und eine zweite Gehäusehalbschale 6, die mit Hilfe von umformtechnischen Maßnahmen, wie beispielsweise Lancieren, kraftschlüssig miteinander verpresst sind. Das Verstärkergehäuse 4 ist durch eine, mit einem pneumatischen Differenzdruck beaufschlagbare, axial bewegliche Wand 7 in eine Arbeitskammer 8 und eine Unterdruckkammer 9 unterteilt. Die axial bewegliche Wand 7 besteht aus einem beispielsweise aus Blech tiefgezogenen Membranteller 10 und einer daran anliegenden flexiblen Membran 11, die zwischen dem äußeren Umfang des Membrantellers 10 und dem Verstärkergehäuse 4 eine Rollmembran mit einer Rollfalte 31 als Abdichtung der beiden Kammern 8,9 zueinander und der beiden Kammern 8,9 gegenüber der Atmosphäre bildet.

Ein durch ein Eingangsglied 12 betätigbares Steuerventil 13 ist in einem, im Verstärkergehäuse 4 abgedichtet geführten, die bewegliche Wand 7 tragenden Steuergehäuse 14 untergebracht und besteht aus einem, am Steuergehäuse 14 ausgebildeten ersten Dichtsitz 15, einem, an einem mit dem Eingangsglied 12 verbundenen Ventilkolben 17 ausgebildeten zweiten Dichtsitz 16 sowie einem mit beiden Dichtsitzen 15,16 zusammenwirkenden Ventilkörper 18, der mittels einer Ventilfeder 19 gegen die Ventilsitze 15,16 gedrückt wird. Wie aus Fig. 1 zu erkennen ist, stützt sich die Ventilfeder 19 an einer im Steuergehäuse 14 angeordneten Haltehülse 20 ab. Die Arbeitskammer 8 ist mit der Unterdruckkammer 9 über einen seitlich im Steuergehäuse 14 verlaufenden Kanal 21 verbindbar. Weiter ist das Eingangsglied 12 mit einem nicht dargestellten Bremspedal verbunden.

Die Bremskraft wird über eine stirnseitig am Steuergehäuse 14 anliegende gummielastische Reaktionsscheibe 22 sowie eine einen Kopfflansch 23 und einen Druckpilz 25 aufweisende Druckstange 24 auf einen Betätigungskolben des Hauptzylinders 3 der Bremsanlage übertragen, der am unterdruckseitigen Ende des Bremskraftverstärkers 2 angebracht ist. Die an dem Eingangsglied 12 eingeleitete Eingangskraft wird auf die Reaktionsscheibe 22 mittels des Ventilkolbens 17 übertragen.

Eine in der Zeichnung schematisch dargestellte Rückstellfeder 26, die sich an der unterdruckseitigen Stirnwand des Verstärkergehäuses 4 abstützt, hält die bewegliche Wand 7 in der gezeigten Ausgangsstellung. Außerdem ist eine Rückholfeder 27 vorgesehen, die zwischen dem Eingangsglied 12 und der Haltehülse 20 angeordnet ist und deren Kraft für eine Vorspannung des Ventilkolbens 17 bzw. seines Ventilsitzes 16 gegenüber dem Ventilkörper 18 sorgt.

Um die Arbeitskammer 8 bei der Betätigung des Steuerventils 13 mit der Atmosphäre verbinden zu können, ist schließlich im Steuergehäuse 14 ein annähernd radial verlaufender Kanal 28 ausgebildet. Die Rückkehrbewegung des Ventilkolbens 17 am Ende eines Bremsvorganges wird dabei durch ein Querglied 29 begrenzt, das in der in der Zeichnung gezeigten Lösestellung des Bremskraftverstärkers an einem das Steuergehäuse 14 im Verstärkergehäuse 4 abgedichtet führenden Gleitdichtring 30 anliegt. Alternativ kann das Querglied 29 auch direkt an dem Verstärkergehäuse 4 anschlagen.

Der an dem Bremskraftverstärker 2 befestigte, nicht im Detail dargestellte Hauptzylinder 3 mit einem Gehäuse 32 sowie mit mindestens einem darin linear verschiebbaren Kolben kann beispielsweise in so genannter Plunger-Bauweise mit ortsfest im Gehäuse 32 angeordneten, und an einer Kolbenwandung mit einer Dichtlippe anliegenden Dichtmanschetten zur Abdichtung der Druckräume vorgesehen sein.

Die Dichtlippen der Dichtmanschetten können in Richtung nicht gezeigten Radbremsen überströmt werden, falls ein Druckgefälle zwischen einem auf dem Hauptzylinder 3 angeordneten Druckmittelvorratsbehälter 33 und Radbremsen eingestellt wird.

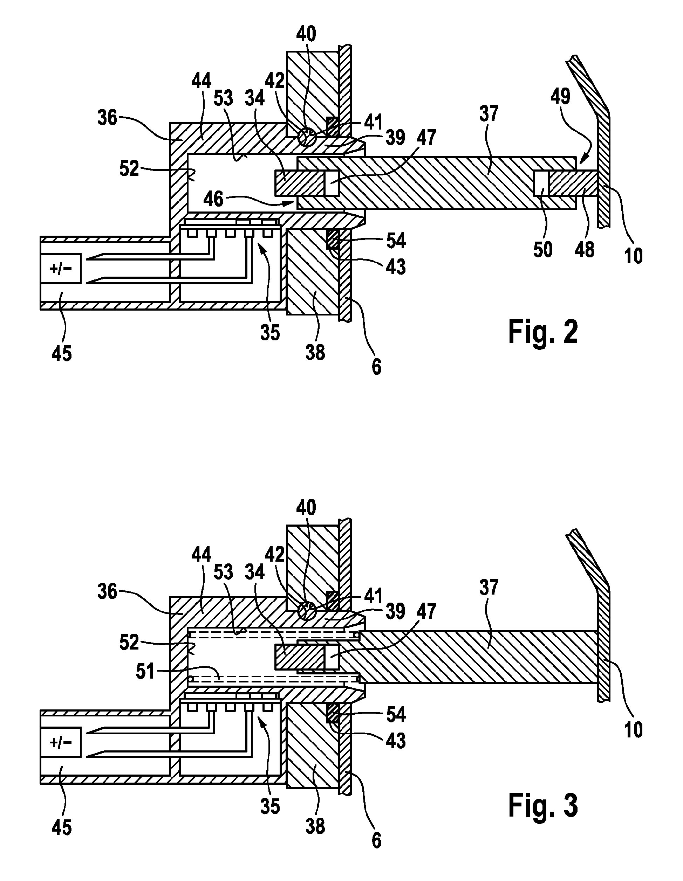

Die Fig. 2 und 3 zeigen jeweils einen Ausschnitt eines ersten Ausführungsbeispiels einer erfindungsgemäßen

Vorrichtung zur Überwachung von Position und Bewegung eines Bremspedals zur Verwendung innerhalb eines geregelten Brems-systems für Kraftfahrzeuge, welche in erster Linie zur Schaltung von Bremswarnleuchten eingesetzt wird.

Die Vorrichtung umfasst eine Bremsbetätigungseinheit 1 wie sie beispielhaft in Fig. 1 dargestellt und vorangehend beschrieben wurde.

Zur Überwachung der Position und der Bewegung des Bremspedals ist ferner ein Stellungsgeber 34 vorgesehen, welcher Signale in Richtung eines Sensorelementes 35 aussendet. Das Sensorelement 35 ist mit einer nicht gezeigten, elektronischen Steuereinheit verbindbar.

Damit das Sensorelement 35 bzw. dessen vakuumfestes Gehäuse 36 aus Kunststoff und der Stellungsgeber 34 im Servicefall ohne großen Aufwand auswechselbar sind, ist der Stellungsgeber 35 bei den beiden gemäß den Fig. 2 und 3 dargestellten Ausführungsbeispielen auf einem an die Bewegung des Steuergehäuses 14 oder der von dem Steuergehäuse 14 getragenen beweglichen Wand 7 gekoppelten Träger 37 vorgesehen, welcher in einem Führungsschacht 53 des Gehäuses 36 des Sensorelementes 35 geführt ist.

Wie den Fig. 2 und 3 entnehmbar ist, durchragt dabei das Gehäuse 36 des Sensorelementes 35 das Verstärkergehäuse 4 bzw. dessen zweite Gehäusehalbschale 6 sowie einen Befestigungsflansch 38 des Gehäuses 32 des Hauptzylinders 3 mit einem ersten Gehäuseabschnitt 39 vakuumdicht.

Zur Befestigung des Gehäuses 36 ist ein federnder Haltestift 40 vorgesehen, welcher zwischen dem Gehäuse 36 und dem Befestigungsflansch 38 eingefügt wird. Hierzu weisen der Befestigungsflansch 38 und der erste Gehäuseabschnittes 39 jeweils eine etwa der halben Form des Haltestifts 40 entsprechende Ausnehmung 41,42 auf, welche sich in Einbaulage des Gehäuses 36 überdecken. Damit das Gehäuse 36 in einfacher Weise demontierbar und somit auch der Stellungsgeber 34 bzw. der Träger 37 ohne größeren Aufwand austauschbar. Anstelle des Haltestiftes sind auch andere geeignete Befestigungsmittel, wie beispielsweise eine Schraube u.a., verwendbar.

Zur Abdichtung des Gehäuses 36 kann wie, aus den Fig. 2 und 3 ersichtlich ist, ein das Gehäuse 36 umgebender Dichtring 54 zwischen dem Befestigungsflansch 38 und dem Gehäuse des Bremskraftverstärkers vorgesehen sein, welcher in einer Ausnehmung 43 des Befestigungsflansches 38 angeordnet ist und an Seiten des ersten Gehäuseabschnittes 38, der zweiten Gehäusehalbschale 6 und des Befestigungsflansches 38 anliegt.

Da das Gehäuse 36 des Sensorelementes 35 mit einem zweiten Gehäuseabschnitt 44 aus der Bremsbetätigungseinheit 1 herausragt und das Sensorelement 35 in dem zweiten Gehäuseabschnitt 44 angeordnet ist, kann in einfacher Weise die Verbindung zur elektronischen Steuereinheit hergestellt werden, indem an dem zweiten Gehäuseabschnitt 44 ein Steckerelement 45 angeformt ist. Die Anordnung des Gehäuses 36 des Sensorelementes 35 erweist sich ferner als packagingoptimal.

Als Sensorelement 35 ist ein Hall-Sensor und als Stellungsgeber 34 ist ein Magnet vorgesehen. Es ist jedoch im Rahmen der Erfindung auch möglich, die Positionserfassung andersartig, beispielsweise optisch oder induktiv, durchzuführen und entsprechende Bauteile einzusetzen.

Der Magnet als Stellungsgeber 34 ist an einem ersten Ende 47 des Trägers 37 angeordnet, welcher beispielsweise aus Kunststoff ausgebildet ist und eine Ausnehmung 47 aufweist, um den Magneten 34 mittels einer Pressverbindung aufzunehmen. Diese Anordnung hat den Vorteil, dass Toleranzen der Bauteile einfach ausgeglichen werden können und der Magnet 34 in einfacher Weise in dem Träger 37 befestigt werden kann.

Nachfolgend wird auf die Unterschiede der beiden Ausführungsbeispiele gemäß den Fig. 2 und 3 eingegangen: Gemäß des in Fig. 2 dargestellten, ersten Ausführungsbeispiels der Erfindung ist die Bewegung des Stellungsgebers 34 an die Bewegung des Membrantellers 10 der beweglichen Wand 7 gekoppelt. Dabei ist ein weiterer Magnet 48 vorgesehen, welcher an einem zweiten Ende 49 des Trägers 37 in einer Ausnehmung 50 angeordnet und mit dem Träger 37 ebenfalls mittels einer Pressverbindung verbunden ist. Diese Anordnung verbessert zusätzlich den Ausgleich der Bauteiltoleranzen. Aufgrund dessen können die Toleranzen an den einzelnen Bauteilen grob vorgesehen werden, was wiederum zu einer Kostenoptimierung führt. Die Magnete 34,48 sind identisch aufgebaut, so dass der Träger 37 symmetrisch verbaut werden kann. Eine falsche Montage des Trägers 37 ist damit ausgeschlossen.

Das in Fig. 3 gezeigte, alternative Ausführungsbeispiel sieht vor, dass zur Kopplung der Bewegung des Stellungsgebers 34 eine Rückstellfeder 51 vorgesehen ist, welche den Träger 37 gegen die bewegliche Wand 7 vorspannt. Dabei stützt sich die Rückstellfeder 51 einenends an einem Boden 52 dem Führungsschachtes 53 des Gehäuses 36 des Sensorelementes 35 und anderenends an dem Träger 37 bzw. an einem am Träger 37 vorgesehenen Absatz ab.

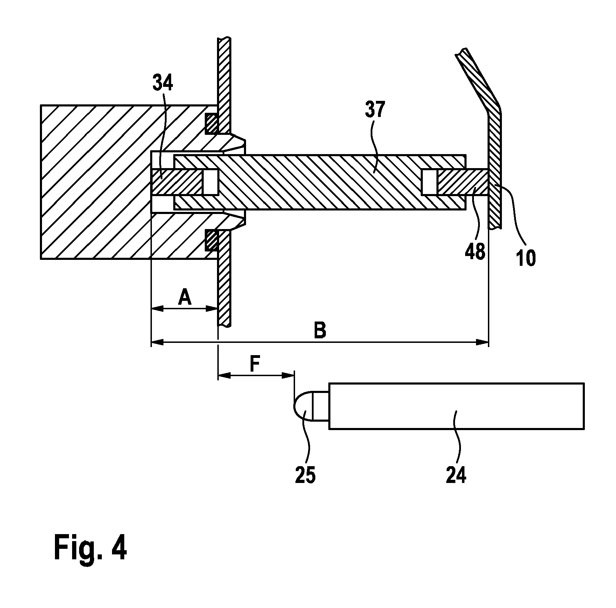

Fig. 4 zeigt den Ausschnitt des ersten Ausführungsbeispiels gemäß Fig. 2 bei der Einstellung der Magnetpositionen auf dem Träger 37. Während ein Funktionsmaß F zwischen dem Druckpilz 25 und dem Verstärkergehäuse 4 bzw. der zweiten Gehäusehalbschale 6 ermittelt und eingestellt wird, werden auch die Werte für die in Fig. 4 dargestellten Abstände A und B gemessen. Wie aus Fig. 4 ersichtlich ist, stellt der Abstand A den Abstand zwischen dem Magneten als Stellungsgeber 34 und der zweiten Gehäusehalbschale 6 dar. Als Abstand B stellt sich der Abstand zwischen dem Magneten als Stellungsgeber 34 und dem Membranteller 10 dar.

Nach dem Ermitteln der Werte von A und B werden diese durch Verschieben der beiden Magnete 34,48 im Träger 37 entsprechend eingestellt. Diese Einstellung reduziert die Toleranzen der Schaltpunkte des Sensorelementes 35.

Weitere, nicht dargestellte alternative Ausführungsbeispiele sehen vor, dass die Bewegung des Stellungsgebers 34 an die Bewegung des Steuergehäuses 14 gekoppelt ist. Dabei liegt der weitere Magnet 48 bzw. der durch die Rückstellfeder 51 vorgespannte Träger 37 direkt an dem Steuergehäuse 14 an.

Um die Kopplung des weiteren Magneten 48 am Steuergehäuse 14, welches aus Kunststoff hergestellt ist, durchzuführen, ist hieran ein Metallelement vorzusehen.

Alle beschriebenen Ausführungsbeispiele weisen die Vorteile auf, dass das Gehäuse 36 sowie der Stellungsgeber 34 im Servicefall austauschbar sind und sich durch die Einstellung der Magnetposition geringe Schalttoleranzen ergeben. Ferner werden für die Bremslichtschalter-Funktion nur wenige und nur einfache Bauteile benötigt, welche einfach zu montieren sind. Zudem können die Bauteile grobe Toleranzen aufweisen.

### Bezugszeichenliste

- 1: Bremsbetätigungseinheit
- 2: Bremskraftverstärker
- 3: Hauptzylinder
- 4: Verstärkergehäuse
- 5: erste Gehäusehalbschale
- 6: zweite Gehäusehalbschale
- 7: bewegliche Wand
- 8: Arbeitskammer
- 9: Unterdruckkammer
- 10: Membranteller
- 11: Membran
- 12: Eingangsglied
- 13: Steuerventil
- 14: Steuergehäuse
- 15: erster Dichtsitz
- 16: zweiter Dichtsitz
- 17: Ventilkolben
- 18: Ventilkörper
- 19: Ventilfeder
- 20: Haltehülse
- 21: Kanal
- 22: Reaktionsscheibe
- 23: Kopfflansch
- 24: Druckstange
- 25: Druckpilz
- 26: Rückstellfeder
- 27: Rückholfeder
- 28: Kanal
- 29: Querglied
- 30: Gleitringdichtung
- 31: Rollfalte
- 32: Gehäuse
- 33: Druckmittelvorratsbehälter
- 34: Stellungsgeber
- 35: Sensorelement
- 36: Gehäuse
- 37: Träger
- 38: Befestigungsflansch
- 39: Gehäuseabschnitt
- 40: Haltestift
- 41: Ausnehmung
- 42: Ausnehmung
- 43: Ausnehmung
- 44: Gehäuseabschnitt
- 45: Steckerelement
- 46: Ende
- 47: Ausnehmung
- 48: Magnet
- 49: Ende
- 50: Ausnehmung
- 51: Rückstellfeder
- 52: Boden
- 53: Führungsschacht
- 54: Dichtring

## Patentansprüche

1. Vorrichtung zur Überwachung von Position und Bewegung eines Bremspedals zur Verwendung innerhalb eines Bremssystems für Kraftfahrzeuge, umfassend eine Bremsbetätigungseinheit (1) mit einem Bremskraftverstärker (2) mit einem Verstärkergehäuse (4), welches durch mindestens eine, mit einem pneumatischen Differenzdruck beaufschlagbare axial bewegliche Wand (7) in mindestens eine Unterdruckkammer (9) und mindestens eine Arbeitskammer (8) unterteilt ist, wobei die bewegliche Wand (7) durch einen an einem Steuergehäuse (14) sich abstützenden Membranteller (10) und eine daran anliegende Membran (11) gebildet ist und einen Stellungsgeber (34) zur Überwachung der Lage des Bremspedals, welcher Signale in Richtung eines Sensorelementes (35) aussendet, das mit einer elektronischen Steuereinheit verbindbar ist, wobei der Stellungsgeber (34) auf einem an die Bewegung des Steuergehäuses (14) oder der von dem Steuergehäuse (14) getragenen beweglichen Wand (7) gekoppelten Träger (37) vorgesehen ist, welcher in einem Gehäuse (36) des Sensorelementes (35) geführt ist, **dadurch gekennzeichnet, dass** an den Bremskraftverstärker (2) ein Hauptzylinder (3) mit einem Gehäuse (32) sowie mit mindestens einem darin linear verschiebbaren Kolben befestigt ist und das Gehäuse (36) des Sensorelementes (35) das Verstärkergehäuse (4) und das Gehäuse (32) des Hauptzylinders (3) mit einem ersten Gehäuseabschnitt (39) vakuumdicht durchragt.

2. Vorrichtung nach Anspruch 1, **dadurch gekennzeichnet, dass** das Gehäuse (36) des Sensorelementes (35) mittels eines Befestigungsmittels demontierbar an dem Gehäuse (32) des Hauptzylinders (3) befestigt vorgesehen ist.

3. Vorrichtung nach Anspruch 2, **dadurch gekennzeichnet, dass** als Befestigungsmittel ein Haltestift (40) vorgesehen ist.

4. Vorrichtung nach einem der vorangehenden Ansprüche 1 bis 3, **dadurch gekennzeichnet, dass** zur Abdichtung ein das Gehäuse (36) des Sensorelementes (35) umgebender Dichtring (54) zwischen dem Gehäuse (32) des Hauptzylinders (3) und dem Verstärkergehäuse (4) vorgesehen ist.

5. Vorrichtung nach einem der vorangehenden Ansprüche, **dadurch gekennzeichnet, dass** das Gehäuse (36) des Sensorelementes (35) mit einem zweiten Gehäuseabschnitt (44) aus der Bremsbetätigungseinheit (1) herausragt, wobei das Sensorelement (35) in dem zweiten Gehäuseabschnitt (44) angeordnet ist, an welchem ein Steckerelement (45) zur Verbindung mit der elektronischen Steuereinheit angeformt ist.

6. Vorrichtung nach einem der vorangehenden Ansprüche, **dadurch gekennzeichnet, dass** als Sensorelement (35) ein Hall-Sensor und als Stellungsgeber (34) ein Magnet vorgesehen sind.

7. Vorrichtung nach einem der vorangehenden Ansprüche, **dadurch gekennzeichnet, dass** der Magnet an einem ersten Ende (46) des Trägers (37) angeordnet und mit dem Träger (37) mittels einer Pressverbindung verbunden ist.

8. Vorrichtung nach einem der vorangehenden Ansprüche, **dadurch gekennzeichnet, dass** die Bewegung des Stellungsgebers (34) an die Bewegung des Membrantellers (10) der beweglichen Wand (7) gekoppelt ist.

9. Vorrichtung nach einem der vorangehenden Ansprüche 1 bis 8, **dadurch gekennzeichnet, dass** die Bewegung des Stellungsgebers (34) an die Bewegung des Steuergehäuses (14) gekoppelt ist.

10. Vorrichtung nach einem der vorangehenden Ansprüche, **dadurch gekennzeichnet, dass** zur Kopplung der Bewegung des Stellungsgebers (34) ein weiterer Magnet (48) vorgesehen ist, welcher an einem zweiten Ende (49) des Trägers (37) angeordnet und mit dem Träger (37) mittels einer Pressverbindung verbunden ist.

11. Vorrichtung nach Anspruch 8 und 9, **dadurch gekennzeichnet, dass** am Steuergehäuse (14) zur Kopplung mit dem weiteren Magnet (48) ein Metallelement vorgesehen ist.

12. Vorrichtung nach einem der vorangehenden Ansprüche 1 bis 9, **dadurch gekennzeichnet, dass** zur Kopplung der Bewegung des Stellungsgebers (34) eine Rückstellfeder (51) vorgesehen ist, welche den Träger (37) gegen das Steuergehäuse (14) oder die von dem Steuergehäuse (14) getragene beweglichen Wand (7) vorspannt.

13. Vorrichtung nach Anspruch 12, **dadurch gekennzeichnet, dass** die Rückstellfeder (51) sich einenends an einem Boden (52) eines Führungsschachtes (53) des Gehäuses (36) des Sensorelementes (35) und sich anderenends an dem Träger (37) abstützt.

## Claims

1. Device for monitoring the position and movement of a brake pedal for use within a brake system for motor vehicles, comprising:
a brake actuating unit (1) having a brake power assist unit (2) having a power assist unit housing (4) that is divided into at least one vacuum chamber (9) and at least one working chamber (8) by means of at least one axially movable wall (7) which can be influenced by a pneumatic differential pressure, wherein the movable wall (7) is embodied as a membrane disk (10), which is supported on a control valve housing (14), and a membrane (11) that lies on said membrane disk, and a position indicator (34) for monitoring the position of the brake pedal, which position indicator transmits signals to a sensor element (35) that can be connected to an electronic control unit, wherein the position indicator (34) is provided on a support (37) that is coupled to the movement of the control valve housing (14) or to the movable wall (7) that is supported by the control valve housing (14), which support is guided in a housing (36) of the sensor element (35), **characterized in that** a master cylinder (3) is fastened to the brake power assist unit (2) and comprises a housing (32) and at least one piston which can be displaced in a linear manner in said master cylinder, and the housing (36) of the sensor element (35) penetrates in a vacuum-tight manner the power assist unit housing (4) and the housing (32) of the master cylinder (3) having a first housing section (39).

2. Device as claimed in Claim 1, **characterized in that** the housing (36) of the sensor element (35) is provided fastened to the housing (32) of the master cylinder (3) by means of a fastening means in such a manner that it can be dismantled.

3. Device as claimed in Claim 2, **characterized in that** a holding pin (40) is provided as a fastening means.

4. Device as claimed in any one of the preceding Claims 1 to 3, **characterized in that** for sealing purposes a sealing ring (54) that encompasses the housing (36) of the sensor element (35) is provided between the housing (32) of the master cylinder (3) and the power assist unit housing (4).

5. Device as claimed in any one of the preceding claims, **characterized in that** the housing (36) of the sensor element (35), which housing comprises a second housing section (44), protrudes out of the brake actuating unit (1), wherein the sensor element (35) is arranged in the second housing section (44), on which a plug connector element (45) is formed in order to provide the connection to the electronic control unit.

6. Device as claimed in any one of the preceding claims, **characterzed in that** a Hall sensor is provided as a sensor element (35) and a magnet is provided as a position indicator (34).

7. Device as claimed in any one of the preceding claims, **characterized in that** the magnet is arranged on a first end (46) of the support (37) and is connected to the support (37) by means of a pressed connection.

8. Device as claimed in any one of the preceding claims, **characterized in that** the movement of the position indicator (34) is coupled to the movement of the membrane disk (10) of the movable wall (7).

9. Device as claimed in any one of the preceding Claims 1 to 8, **characterized in that** the movement of the position indicator (34) is coupled to the movement of the control valve housing (14).

10. Device as claimed in any one of the preceding claims, **characterized in that** a further magnet (48) is provided for coupling the movement of the position indicator (34), which magnet is arranged on a second end (49) of the support (37) and is connected to the support (37) by means of a pressed connection.

11. Device as claimed in Claim 8 and 9, **characterized in that** a metal element is provided on the control valve housing (14) for coupling to the further magnet (48).

12. Device as claimed in any of the preceding Claims 1 to 9, **characterized in that** a return spring (51) is provided for coupling the movement of the position indicator (34), which return spring prestresses the support (37) against the control valve housing (14) or the movable wall (7) that is supported by the control valve housing (14).

13. Device as claimed in Claim 12, **characterized in that** the return spring (51) is supported at one end on a floor (52) of a guide shaft (53) of the housing (36) of the sensor element (35) and at the other end on the support (37).

## Revendications

1. Dispositif de surveillance de la position et du déplacement d'une pédale de frein à utiliser à l'intérieur d'un système de freinage pour véhicules automobiles, comprenant une unité d'actionnement de frein (1) dotée d'un amplificateur de force de freinage (2) avec un carter d'amplificateur (4) subdivisé, par une paroi (7) pouvant être déplacée dans le plan axial et pouvant être alimentée avec au moins une pression différentielle pneumatique, en au moins une chambre de sous-pression (9) et au moins une chambre de travail (8), la paroi (7) mobile étant formée par une rondelle à membrane (10) s'appuyant contre un carter de commande (14) et une membrane (11) reposant contre elle et un capteur de position (34) pour la surveillance de la position de la pédale de frein émettant des signaux en direction d'un élément de détection (35) pouvant être relié à une unité de commande électronique, le capteur de position (34) étant prévu sur un support (37) couplé au niveau du déplacement du carter de commande (14) ou de la paroi (7) mobile supportée par le carter de commande (14), ledit capteur étant conduit dans un carter (36) de l'élément de détection (35), **caractérisé en ce qu'**un cylindre principal (3) est fixé à un carter (32) ainsi qu'à au moins un piston pouvant être coulissé dedans de façon linéaire au niveau de l'amplificateur de force de freinage (2) et que le carter (36) de l'élément de détection (35) traverse de façon étanche au vide le carter d'amplificateur (4) et le carter (32) du cylindre principal (3) avec une première section de carter (39).

2. Dispositif selon la revendication 1, **caractérisé en ce que** le carter (36) de l'élément de détection (35) est prévu pour être fixé à l'aide d'un moyen de fixation pouvant être démonté au niveau du carter (32) du cylindre principal (3).

3. Dispositif selon la revendication 2, **caractérisé en ce que** le moyen de fixation prévu est une tige d'arrêt (40).

4. Dispositif selon l'une quelconque des revendications 1 à 3, **caractérisé en ce qu'**une bague d'étanchéité (54) entourant le carter (36) de l'élément de détection (35) est prévue entre le carter (32) du cylindre principal (3) et le carter d'amplificateur (4) en vue de réaliser l'étanchéité.

5. Dispositif selon l'une quelconque des revendications précédentes, **caractérisé en ce que** le carter (36) de l'élément de détection (35) ressort, avec une deuxième section de carter (44), hors de l'unité d'actionnement de frein (1), l'élément de détection (35) étant disposé dans la deuxième section de carter (44) au niveau de laquelle un élément de fiche mâle (45) assurant la liaison avec l'unité de commande électronique est formé.

6. Dispositif selon l'une quelconque des revendications précédentes, **caractérisé en ce que** l'élément de détection (35) prévu est un capteur à effet de Hall et que le capteur de position (34) prévu est un aimant.

7. Dispositif selon l'une quelconque des revendications précédentes, **caractérisé en ce que** l'aimant est disposé au niveau d'une première extrémité (46) du support (37) et relié au support (37) au moyen d'une connexion sertie.

8. Dispositif selon l'une quelconque des revendications précédentes, **caractérisé en ce que** le déplacement du capteur de position (34) est couplé au déplacement de la rondelle à membrane (10) de la paroi (7) mobile.

9. Dispositif selon l'une quelconque des revendications 1 à 8, **caractérisé en ce que** le déplacement du capteur de position (34) est couplé au déplacement du carter de commande (14).

10. Dispositif selon l'une quelconque des revendications précédentes, **caractérisé en ce qu'**un aimant (48) supplémentaire disposé à une deuxième extrémité (49) du support (37) et relié au support (37) au moyen d'une connexion sertie est prévu pour réaliser le couplage du déplacement du capteur de position (34).

11. Dispositif selon la revendication 8 et 9, **caractérisé en ce qu'**un élément métallique est prévu au niveau du carter de commande (14) pour réaliser le couplage avec l'aimant (48) supplémentaire.

12. Dispositif selon l'une quelconque des revendications 1 à 9, **caractérisé en ce qu'**un ressort de rappel (51) précontraignant le support (37) contre le carter de commande (14) ou la paroi (7) mobile supportée par le carter de commande (14) est prévu pour réaliser le couplage du déplacement du capteur de position (34).

13. Dispositif selon la revendication 12, **caractérisé en ce que** le ressort de rappel (51) s'appuie au niveau d'une extrémité contre un fond (52) d'une goulotte de guidage (53) du carter (36) de l'élément de détection (35) et s'appuie au niveau de l'autre extrémité contre le support (37).
